# EUROPÄISCHE PATENTSCHRIFT

(11) **EP 2 230 103 B1**
(45) Veröffentlichungstag und Bekanntmachung des Hinweises auf die Patenterteilung: **02.11.2011**
(21) Anmeldenummer: 09175625.4
(22) Anmeldetag: 11.11.2009
(51) Int. Cl.: B60C 11/11, B60C 11/13

(54) **Laufflächenprofil eines Fahrzeugluftreifens**
Bearing surface profile of a vehicle pneumatic tyre
Profil de surface de roulement d'un pneu de véhicule

(30) Priorität: 19.03.2009 DE 102009003642
(43) Veröffentlichungstag der Anmeldung: 22.09.2010
(73) Patentinhaber: Continental Reifen Deutschland GmbH, 30165 Hannover (DE)
(72) Erfinder: Schlittenhard, Jan, 30900, Wedemark (DE)
(74) Vertreter: Finger, Karsten

(56) Entgegenhaltungen:
- EP-A1- 0 609 195
- EP-A1- 1 798 067
- DE-A1- 19 900 266
- DE-A1-102007 061 148
- JP-A- 2001 071 709
- JP-A- 2001 199 206
- JP-A- 2003 080 907
- US-A1- 2007 215 258

## Beschreibung

Die Erfindung betrifft ein Laufflächenprofil eines Fahrzeugreifens - insbesondere eines Fahrzeugluftreifens - mit zwei in axialer Richtung A des Fahrzeugluftreifens benachbarten radial erhabenen Profilblockelementen, die durch eine Profilrille voneinander beabstandet sind, wobei die beide Profilblockelemente in Umfangsrichtung zu beiden Seiten jeweils von einer Querrille begrenzt werden und sich die Profilrille von der einen die beiden Profilblockelemente begrenzenden Querrille zu der anderen die beiden Profilblockelemente begrenzenden Querrille erstreckt, mit längs der Erstreckungsrichtung der Profilrille verändert ausgebildeten in axialer Richtung A des Fahrzeugreifens gemessenen Quersteifigkeiten beider Profilblockelemente, wobei ausgehend von der ersten Querrille zur zweiten Querrille die Quersteifigkeit des ersten Profilblockelementes zu- und die Quersteifigkeit des zweiten Profilblockelementes abnimmt, mit einem gegenüber dem Rillengrund der Querrillen radial erhöhten Rillengrund der Profilblockrille.

Ein derartiges Laufflächenprofil ist aus der DE 1 02005060724A 1 bekannt. Bei der bekannten Ausbildung ist in einer zwei Profilblockelemente trennenden Profilrille an einem ersten der beiden durch die Profilrille voneinander beabstandeten Profilblockelemente längs eines Erstreckungsbereichs mit geringerer Quersteifigkeit dieses ersten Profilblockelements ein stufenförmiger Absatz in der Querrille ausgebildet, der sich von diesem ersten Profilblockelement ausgehend quer zur Erstreckungsrichtung der Profilrille in die Profilrille hinein bis in einen definierten Abstand a vom zweiten Profilblockelement erstreckt. Hierdurch ist dieses erste Profilblockelement in seinem hinsichtlich seiner Quersteifigkeit schwächer ausgebildeten Erstreckungsbereich zusätzlich gestützt. Hierdurch erhalten die beiden benachbarten Profilblockelemente eine sich gegenseitig stützende stabilere Ausbildung. Das zweite durch die Profilrille vom ersten Profilblockelement getrennte Profilblockelement, das jedoch ebenfalls hinsichtlich seines Quersteifigkeitsverlaufes entlang seiner Umfangserstreckung unterliegt, erhält innerhalb des Erstreckungsbereichs dieser trennenden Profilrille keinerlei Stützwirkung gegen die durch eigene Quersteifigkeitsunterschiede bedingten Deformationsunterschiede. Dem Dokument ist zwar zu entnehmen, ein solches zweite Profilblockelement in einem Umfangserstreckungsbereich außerhalb des Erstreckungsbereiches der Profilrille an seiner dort hinsichtlich Quersteifigkeiten schwächsten Stelle durch eine stufenförmige Erhebung in einer anderen schmalen Rille zu stützen. Die Stützwirkung von zwei Profilblockelementen erfolgt jeweils in unterschiedlichen Rillen.

Durch die aus dem Dokument bekannte Lehre wird das besonders gegen Querkräfte empfindliche erste Profilblockelement, das ein Profilblockelement einer Schulterprofilblockreihe ist, durch eine einzige stufenförmige Erhebung in der das erste Profilblockelement vom Profilblockelement der Nachbarprofilblockreihe trennenden Profilrille gestützt, während dieses Nachbarelement in seinem hinsichtlich der Querkraftverteilung empfindlichen Bereich im Erstreckungsbereich dieser Profilrille keine eigene Stützung erfährt. Somit erfolgt die Kraftübertragung über die beiden benachbarten Profilblockreihen hinweg lediglich über den kurzen Erstreckungsbereich der radialen stufenförmigen Erhebung in der Rille. Dies tritt verstärkt bei abgeplatteten Reifen beim Durchlaufen durch den Reifenlatsch, bei dem sich die beiden Profilblockelemente über die stufenförmige Erhebung gegenseitig abstützen, auf. Dies bedingt eine erhöhte einseitige Belastung der beiden Profilblockelemente bei Querkraftübertragung. Die hierdurch bedingte einseitige Belastung begünstigt einen immer noch unerwünscht hohen ungleichmäßigen Abrieb und eine reduzierte Querkraftübertragung.

Der Erfindung liegt daher die Aufgabe zugrunde, ein Laufflächenprofil eines Fahrzeugreifens - insbesondere eines Fahrzeugluftreifens - mit zwei in axialer Richtung A des Fahrzeugluftreifens benachbarten radial erhabenen Profilblockelementen, die durch eine Profilrille voneinander beabstandet sind, wobei die beiden Profilblockelemente in Umfangsrichtung zu beiden Seiten hin jeweils von einer Querrille begrenzt werden und sich die Profilrille von der einen die beiden Profilblockelemente begrenzenden Querrille zu der anderen die beiden Profilblockelemente begrenzenden Querrille erstreckt, mit längs der Erstreckungsrichtung der Profilrille verändert ausgebildeten in axialer Richtung A des Fahrzeugreifens gemessenen Quersteifigkeiten beider Profilblockelemente, wobei ausgehend von der ersten Querrille zur zweiten Querrille die Quersteifigkeit des ersten Profilblockelementes zu- und die Quersteifigkeit des zweiten Profilblockelementes abnimmt, mit einem gegenüber dem Rillengrund der Querrillen radial erhöhten Rillengrund der Profilblockrille, zu schaffen, bei dem in einfacher Weise die von der Profilrille getrennten benachbarten Profilblockelemente gleichmäßig versteift und das Blockprofil bei Abplattung gleichmäßig gestützt wird und bei dem somit bei hoher Querkraftübertragung ein vergleichmäßigter Abrieb ermöglicht wird.

Erfindungsgemäß gelöst wird die Aufgabe durch Ausbildung eines Laufflächenprofils eines Fahrzeugreifens - insbesondere eines Fahrzeugluftreifens - mit zwei in axialer Richtung A des Fahrzeugluftreifens benachbarten radial erhabenen Profilblockelementen, die durch eine Profilrille voneinander beabstandet sind, wobei die beide Profilblockelemente in Umfangsrichtung zu beiden Seiten jeweils von einer Querrille begrenzt werden und sich die Profilrille von der einen die beiden Profilblockelemente begrenzenden Querrille zu der anderen die beiden Profilblockelemente begrenzenden Querrille erstreckt, mit längs der Erstreckungsrichtung der Profilrille verändert ausgebildeten in axialer Richtung A des Fahrzeugreifens gemessenen Quersteifigkeiten beider Profilblockelemente, wobei ausgehend von der ersten Querrille zur zweiten Querrille die Quersteifigkeit des ersten Profilblockelementes zu- und die Quersteifigkeit des zweiten Profilblockelementes abnimmt, mit einem gegenüber dem Rillengrund der Querrillen radial erhöhten Rillengrund der Profilblockrille gemäß den Merkmalen von Anspruch 1, bei dem längs der gesamten Erstreckung der Profilrille im Rillengrund eine zusätzliche schmale Nut mit einer in radialer Richtung gemessenen Nuttiefe t_{N} ausgebildet ist, wobei sich die Nut ausgehend von der ersten Querrille in Richtung zweiter Querrille in einem ersten Erstreckungsbereich längs der Profilrille in radialer Verlängerung der Profilrille an der das zweite Profilblockelement begrenzenden Rillenwand der Profilrille und im Abstand a₁ mit a₁>0 vom ersten Profilblockelement und in einem bis zur zweiten Querrille reichenden Erstreckungsbereich längs der Profilrille in radialer Verlängerung der Profilrille an der das erste Profilblockelement begrenzenden Rillenwand der Profilrille im Abstand a₂ mit a₂>0 vom zweiten Profilblockelement erstreckt, mit einem Übergang zwischen erstem und zweitem Erstreckungsbereich, in welchem die Nut in ihrem Verlauf sich quer zur Erstreckungsrichtung der Profilrille über die Breite der Profilrille hinweg von der das zweite Profilblockelement begrenzenden zu der das erste Profilblockelement begrenzenden Rillenwand erstreckt.

Hierdurch werden innerhalb einer die beiden Profilblockelemente voneinander trennenden Profilrille beide angrenzenden Profilblockelemente jeweils in ihrem hinsichtlich Quersteifigkeiten, schwächeren Erstreckungsbereich zusätzlich gestützt. Die Nut bewirkt die erforderliche Entkopplung der beiden Profilblockelemente, so dass diese die erforderliche Beweglichkeit aufweisen. Der Nutverlauf bewirkt, dass der im ersten Erstreckungsbereich zwischen Nut und erstem Profilblockelement ausgebildete erhöhte Rillengrund das erste Profilblockelement in dessen hinsichtlich der Quersteifigkeit geschwächten Erstreckungsbereich stützt und der im zweiten Erstreckungsbereich das zweite Profilblockelement in dessen hinsichtlich der Quersteifigkeit geschwächten Erstreckungsbereich stützt. Hierdurch werden in einfacher, platzsparender Weise lediglich durch eine einzige Maßnahme innerhalb einer Profilrille über den gesamten Erstreckungsbereich der Profilrille beide benachbarten Profilblockelemente in ihrer Quersteifigkeit vergleichmäßigt. Darüber hinaus bewirkt der Verlauf der zusätzlichen Nut, dass sich die beiden Profilblockelemente bei abgeplattetem Reifen beim Durchlaufen des Latsches gegenseitig über den gesamten Erstreckungsbereich der Profilrille abstützen. Somit erfolgt über die gesamte Längserstreckung der Profilrille die Kraftübertragung zwischen den beiden Profilblockelementen, wodurch eine gleichmäßige Belastung unter Vermeidung von Lastspitzen erfolgt. Das Blockprofil wird über den gesamten Erstreckungsbereich der benachbarten Profilblockelemente gleichmäßig gestützt. Der lange zur Verfügung stehende Erstreckungsbereich der Profilrille, der vollständig zur Querkraftübertragung zwischen den Profilblockelementen genutzt wird, ermöglicht eine erhöhte Querkraftübertragung und das bei vergleichmäßigtem Abrieb.

Besonders vorteilhaft ist die Ausbildung eines Laufflächenprofils gemäß den Merkmalen von Anspruch 2, wobei der Rillengrund der Profilrille mit längs seiner Erstreckung in Erstreckungsrichtung der Profilrille konstanter Rillentiefe t_{R} ausgebildet ist, wobei die Rillentiefe t_{R} in jedem Querschnitt senkrecht zur Erstreckungrichtung der Profilrille jeweils der maximale radiale Abstand von der die beiden Profilblockelemente in radialer Richtung R des Reifens nach außen begrenzenden, die Straßenkontaktoberfläche bildenden Mantelfläche ist. Hierdurch wird eine gleichmäßige versteifende Wirkung über den gesamten Erstreckungsbereich der Profilrille erreicht, so dass die Profilelemente gleichmäßig an der Querkraftübertragung beteiligt werden können.

Besonders vorteilhaft ist die Ausbildung eines Laufflächenprofils gemäß den Merkmalen von Anspruch 3, wobei der Rillengrund der Profilrille ausgehend von den beiden Querrillen bis zu dem die Profilrille querenden Nutabschnitt mit längs der Erstreckung des Rillengrundes in Erstreckungsrichtung der Profilrille zunehmender Rillentiefe t_{R} ausgebildet ist, wobei die Rillentiefe t_{R} in jedem Querschnitt senkrecht zur Erstreckungrichtung der Profilrille jeweils der maximale radiale Abstand von der die beiden Profilblockelemente in radialer Richtung R des Reifens nach außen begrenzenden, die Straßenkontaktoberfläche bildenden Mantelfläche ist. Üblicherweise nimmt die Beweglichkeit der Profilblockelemente in Umfangsrichtung zur Mitte des Profilblockelementes hin ab. Die Ausbildung ermöglicht es durch den Verlauf der Rillentiefe auch der hierdurch bedingten ungleichförmigen Steifigkeit entgegenzuwirken. Auch bei großen Profilklötzen mit großen Anständen in Umfangsrichtung zwischen den trennenden Quernuten kann hierdurch eine hohe gleichförmige Steifigkeit erzielt werden.

Besonders vorteilhaft ist die Ausbildung eines Laufflächenprofils gemäß den Merkmalen von Anspruch 4, wobei die das erste Profilblockelement begrenzende Rillenwand der Profilrille in den Querschnittsebenen senkrecht zur Erstreckungsrichtung der Profilrille einen Neigungswinkel α zur radialen Richtung R des Fahrzeugluftreifens und die das zweite Profilblockelement begrenzende Rillenwand der Profilrille in den Querschnittsebenen senkrecht zur Erstreckungsrichtung der Profilrille einen Neigungswinkel β zur radialen Richtung R des Fahrzeugluftreifens aufweist, wobei 0°≤α≤15° und 0°≤β≤15°.

Besonders vorteilhaft ist die Ausbildung eines Laufflächenprofils gemäß den Merkmalen von Anspruch 5, wobei in allen Querschnittebenen senkrecht zur Erstreckungsrichtung der Profilrille α = β ausgebildet ist. Die Symmetrie der Flankenwinkel beeinflusst das Einformverhalten des unvulkanisierten Reifenrohlings in die Vulkanisationsform und das Fliessverhalten der Laufstreifenkautschukmischung positiv. Darüber hinaus wird hierdurch ein ähnliches Verformungsverhalten der von Profilblockelemente begünstigt.

Besonders vorteilhaft ist die Ausbildung eines Laufflächenprofils gemäß den Merkmalen von Anspruch 6, wobei in allen Querschnittebenen senkrecht zur Erstreckungsrichtung der Profilrille α > β ausgebildet ist. Hierdurch wird verstärkt der Verformung in Querrichtung des Profilblockelements mit der Rillenwand, die den Flankenwinkel α aufweist, entgegengewirkt. Dies ist z.B. bei sehr stark belasteten Schulterklötzen von Vorteil.

Besonders vorteilhaft ist die Ausbildung eines Laufflächenprofils gemäß den Merkmalen von Anspruch 7, wobei im ersten Erstreckungsbereich der Profilrille in allen Querschnittebenen senkrecht zur Erstreckungsrichtung der Profilrille α > β und im zweiten Erstreckungsbereich der Profilrille in allen Querschnittebenen senkrecht zur Erstreckungsrichtung der Profilrille β > α ausgebildet ist.

Besonders vorteilhaft ist die Ausbildung eines Laufflächenprofils gemäß den Merkmalen von Anspruch 8, wobei die Nut längs ihrer Erstreckung mit einer quer zur Erstreckungsrichtung gemessenen Breite c ausgebildet ist mit 0,3mm ≤ c ≤ 7mm, insbesondere mit 0,4mm ≤ c ≤ 1mm. Durch diese Einstellung der Nutbreite besonders im Bereich 0,4 mm bis 1 mm lässt sich sehr zuverlässig der Abstützeffekt der Profilelemente auf die durch die Reifenkontur bedingte Abplattbewegung abstimmen.

Besonders vorteilhaft ist die Ausbildung eines Laufflächenprofils gemäß den Merkmalen von Anspruch 9, wobei die Breite c der Nut längs ihrer Erstreckung im ersten Erstreckungsbereich und/oder im zweiten Erstreckungsbereich und/oder im Übergang jeweils ein konstanter Wert ist. Dies ermöglicht mit einfachen Mitteln den notwendigen Abstützeffekt für die notwendigen Bereiche gesondert einzustellen. Diese Ausführung ist besonders bei breiten Umfangsrillen vorteilhaft, weil die sich zur Reifenmitte hin zunehmende Zwangsverformung bei der Abplattung z.B. durch eine angepasste Ausführung kompensieren lässt.

Besonders vorteilhaft ist die Ausbildung eines Laufflächenprofils gemäß den Merkmalen von Anspruch 10, wobei die Breite c der Nut längs ihrer gesamten Erstreckung im ersten und zweiten Erstreckungsbereich und insbesondere auch im Übergang identisch ist. Die konstante Breite der Nut ist besonders bei schmalen Umfangsrillen vorteilhaft und erleichtert eine einfache Herstellung.

Besonders vorteilhaft ist die Ausbildung eines Laufflächenprofils gemäß den Merkmalen von Anspruch 11, wobei die Breite c der Nut längs ihrer Erstreckung im Übergang größer ist als im ersten und im zweiten Erstreckungsbereich. Diese Ausführung ermöglicht in einfacherer Weise eine verstärkte der Entkopplung der Profilblockelemente in Reifenumfangsrichtung.

Besonders vorteilhaft ist die Ausbildung eines Laufflächenprofils gemäß den Merkmalen von Anspruch 12, wobei die Breite c der Nut längs ihrer Erstreckung im ersten Erstreckungsbereich ausgehend von der ersten Querrille bis zum Übergang und im zweiten Erstreckungsbereich ausgehend von der zweiten Querrille bis zum Übergang jeweils mit - insbesondere kontinuierlich - zunehmender Größe ausgebildet ist. Hierdurch kann auch bei großen Profilblockelementen die notwendige Abstützung optimal auf die sich bei der Abplattung einstellenden Bedingungen eingestellt werden.

Die Erfindung wird im Folgenden an Hand der in den Figuren 1 bis 12 dargestellten Ausführungsbeispiele näher erläutert. Dabei zeigen
- Fig. 1: Umfangsabschnitt eines Laufstreifenprofils eines Fahrzeugluftreifens für Personenkraftwagen (Pkw) mit Wintereignung in Draufsicht, wobei zur Vereinfachung lediglich der axiale Erstreckungsbereich zwischen einer Reifenschulter und der Äquatorebene dargestellt ist,
- Fig. 2: Schnittdarstellung einer zwei Profilblockelemente trennenden Profilrille gemäß Schnitt II-II,
- Fig. 3: Schnittdarstellung der Profilrille gemäß Schnitt III-III von Fig. 1,
- Fig. 4: Profilrille gemäß Schnitt IV-IV von Fig. 1,
- Fig. 5: erte Alternative Ausführung einer zwei Profilblockelemente trennenden Profilrille im Schnitt II-II von Fig. 1,
- Fig. 6: Schnittdarstellung der ersten Alternative der Profilrille im Schnitt III-III von Fig. 1,
- Fig. 7: Zweite Alternative einer zwei Profilblockelemente trennenden Profilrille im Schnitt II-II von Fig. 1,
- Fig. 8: Zweite Alternative der Profilrille im Schnitt III-III von Fig. 1,
- Fig. 9: Dritte Alternative einer Profilrille von Fig. 1 im Schnitt IV-IV von Fig. 1,
- Fig.: 10 Draufsicht auf zwei benachbarte Profilblockelemente mit Profilrille von Fig. 1 in alternativer Ausführung,
- Fig. 11: Draufsicht auf zwei benachbarte Profilblockelemente mit Profilrille in einer weiteren alternativen Ausführung, und
- Fig. 12: Draufsicht auf zwei benachbarte Profilblockelemente mit Profilrille in einer weiteren alternativen Ausbildung.

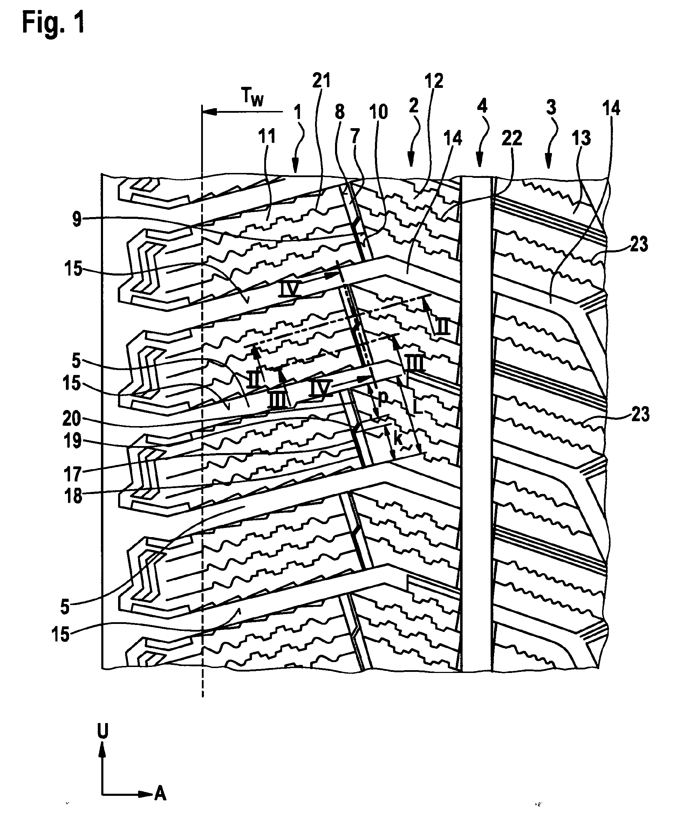

Fig. 1 zeigt das Laufstreifenprofil eines Fahrzeugluftreifens für Personenkraftwagen (Pkw) mit Wintereigenschaften, bei dem zur Vereinfachung lediglich axiale Hälfte mit einer im Bereich der linken Reifenschulter ausgebildeten Profilblockreihe 1, einer in axialer Richtung A des Fahrzeugluftreifens daneben angeordneten Profilblockreihe 2 und einer weiteren axial neben der Profilblockreihe 2 angeordneten bis zur Reifenäquatorebene reichenden Profilblockreihe 3 dargestellt ist. Die Profilblockreihe 1 erstreckt sich in Umfangsrichtung U über den gesamten Umfang des Fahrzeugluftreifens und ist in bekannter Weise aus einer Vielzahl von in Umfangsrichtung U hintereinander angeordneten und jeweils durch eine Querrille 5 voneinander beabstandeten Profilblockelementen 11 ausgebildet. Die Profilblockreihe 2 erstreckt sich in Umfangsrichtung über den gesamten Umfang des Fahrzeugluftreifens und ist in bekannter Weise aus einer Vielzahl von in Umfangsrichtung U des Fahrzeugluftreifens über den Umfang verteilt angeordneten und jeweils durch eine der Querrillen 5 voneinander beabstandeten Profilblockelementen 12 ausgebildet. Die Profilblockreihe 3 erstreckt sich in Umfangsrichtung über den gesamten Umfang des Fahrzeugluftreifens und ist in bekannter Weise aus einer Vielzahl von in Umfangsrichtung U des Fahrzeugluftreifens über den Umfang verteilt angeordneten und jeweils durch eine der Querrillen 14 voneinander beabstandeten Profilblockelementen 13 ausgebildet. Die Profilblockreihe 2 und die Profilblockreihe 3 sind in axialer Richtung A des Fahrzeugluftreifens durch eine in Umfangsrichtung U ausgerichtete und über den gesamten Umfang des Fahrzeugluftreifens erstreckte Umfangsrille 4 voneinander beabstandet. Die jeweils zwischen zwei in Umfangsrichtung U benachbarten Querrillen in axialer Richtung A benachbart zu einander angeordneten Profilblockelemente 11 der Profilblockreihe 1 und Profilblockelemente 12 der Profilblockreihe 2 sind jeweils durch eine schräg zur Umfangsrichtung unter Einschluss eines Winkels von ca. 10° zur Umfangsrichtung ausgerichteten Umfangsrille 7 in axialer Richtung voneinander getrennt angeordnet.

Die Querrillen 5 verlaufen parallel zueinander und erstrecken sich von einer axialen Position außerhalb der Bodenaufstandsfläche TW unter Einschluss eines Winkels von ca. 15° zur axialen Richtung A mit in der Darstellung nach oben gerichteter Umfangsorientierung geradlinig über den gesamten Erstreckungsbereich der Profilblockreihe 1 bis in den axialen Erstreckungsbereich der Profilblockreihe 2, wo sie in ihrem Verlauf einen Knick erfahren. Ab der Knickstelle verlaufen die Querrillen 5 wiederum unter Einschluss eines Neigungswinkels von ca. 15° zur axialen Richtung, jedoch mit gegenüber ihrer Verlauf im Erstreckungsbereich der Profilblockelemente 1 geänderter Umfangsorientierung und münden in die Umfangsrille 4.

Diese Ausbildung bewirkt, dass die Profilblockelemente 11 in der dargestellten Ausführung längs der Erstreckung der Umfangsrille 7 mit ihrem zu der dem Profilblockelement 11 in der in Figur 1 nach oben dargestellten Orientierung der Umfangsrichtung U jeweils vorgeordneten Querrille 15 weisenden Erstreckungsabschnitt eine geringere Quersteifigkeit als in dem zu der dem Profilblockelement 11 in Umfangsrichtung U jeweils nachgeordneten Querrille 15 weisenden Erstreckungsabschnitt aufweisen und dass die Profilblockelemente 12 längs der Erstreckung der Umfangsrille 7 mit ihrem zu der dem Profilblockelement 12 in der in Figur 1 nach oben dargestellten Orientierung der Umfangsrichtung U jeweils vorgeordneten Querrille 15 weisenden Erstreckungsabschnitt eine höhere Quersteifigkeit als in dem zu der dem Profilblockelement 12 in Umfangsrichtung U jeweils nachgeordneten Querrille 15 weisenden Erstreckungsabschnitt aufweisen.

Die Profilblockelemente 11 sind auf ihrer radial äußeren, die Straßenkontaktfläche bildenden Mantelfläche mit parallelen oder nahezu parallelen Feineinschnitten 21 ausgebildet, die sich mit ihrem Haupterstreckungsverlauf parallel oder nahezu parallel zu den Querrillen 5 von außerhalb der axialen Erstreckung TW der Bodenaufstandsfläche bis in die Umfangsrille 7 hinein erstrecken. Die Profilblockelementen 12 sind auf ihrer radial äußeren, die Straßenkontaktfläche bildenden Mantelfläche mit parallelen Feineinschnitten 22 ausgebildet, die sich mit ihrem Haupterstreckungsverlauf ausgehend von der Umfangsrille 4 im Wesentlichen parallel zu dem zwischen Umfangsrille 4 und der Knickstelle der Querrillen 5 ausgebildeten Verlauf der Querrille 5 erstrecken. In den Profilblockelementen 13 sind parallel zu den Querrillen 14 Feineinschnitte 23 ausgebildet, die sich in axialer Richtung A bis in die Umfangsrille 4 hinein erstrecken.

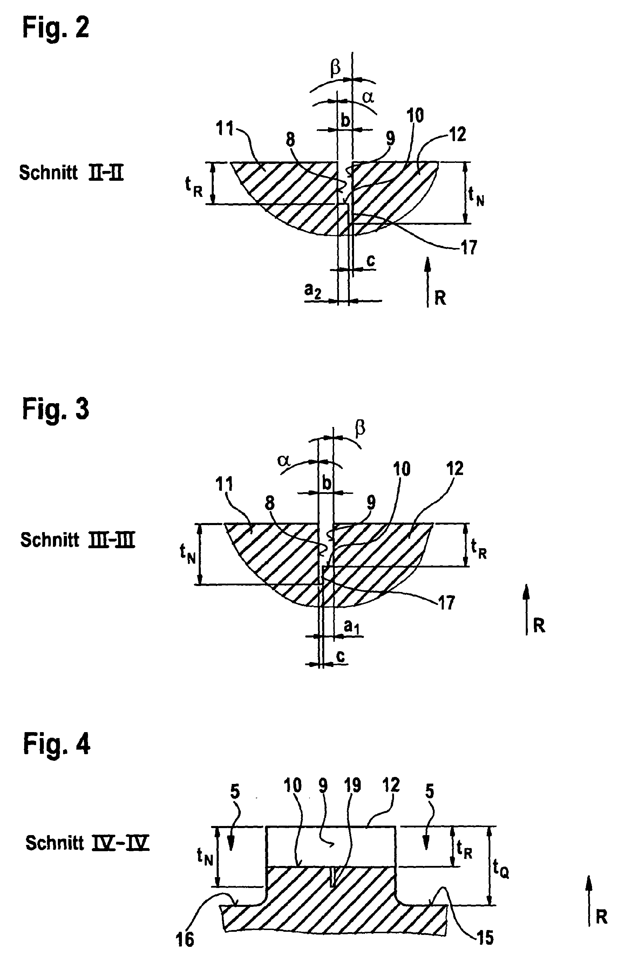

Wie in Fig. 1, 2, 3 und 4 zu erkennen sind, sind die Querrillen 5 nach radial innen jeweils mit einem Rillengrund 15 begrenzt, aus dem sich jeweils beiderseits des Rillengrundes 15 eine Rillenwand radial nach außen bis zu der die Straßenkontaktfläche bildenden Mantelfläche erstreckt, wobei die in der Figur 1 nach oben dargestellten Orientierung der Umfangsrichtung U vorgeordnete Querrille 5 mit ihrer dem Rillengrund 15 nachgeordneten Rillenwand des in Umfangsrichtung U nachfolgende Profilblockelement 11 bzw.12 und die dem Rillengrund 15 vorgeordnete Rillenwand, das der Querrille 5 vorgeordnete Profilblockelement 11 bzw. 12 begrenzt. Die Querrillen 5 sind mit einer Rillentiefe T_{Q} ausgebildet, die in jeder Querschnittsebene senkrecht zur Erstreckungsrichtung einer Querrille 5 jeweils die maximale radiale Erstreckung zwischen der radial äußeren, die beiden angrenzenden Profilblockelemente 11 bzw. 12 begrenzenden Mantelfläche und dem tiefsten Punkt des Rillengrundes 5 angibt.

Ebenso sind die Umfangsrillen 7 über ihren gesamten Erstreckungsbereich in Umfangsrichtung U zwischen zwei hintereinander angeordneten Querrillen 15 mit einem in Richtung der Umfangsrille 7 erstreckten die Umfangsrille 7 nach radial innen begrenzenden Rillengrund 10 ausgebildet, aus dem sich zum jeweiligen Profilblockelement 11 hin eine das Profilblockelement 11 zur Umfangsrille 7 begrenzende Rillenwand 8 und zum Profilblockelement 12 hin eine das Profilblockelement 12 zur Umfangsrille 7 hin begrenzende Rillenwand 9 nach radial außen erstreckt. Die beiden Rillenwände 8 und 9 erstrecken sich dabei aus dem Rillengrund 10 nach radial außen bis zu der die radial äußere die Straßenkontaktfläche bildenden Mantelfläche der beiden die Umfangsrille 7 begrenzenden Profilblockelemente 11 und 12. Die Umfangsrille 7 ist dabei mit einer Rillentiefe T_{R} ausgebildet, wobei die Rillentiefe T_{R} in allen Querschnittsebenen senkrecht zur Haupterstreckungsrichtung der Umfangsrille 7 jeweils den radialen Abstand zwischen der die beiden von der Umfangsrille 7 getrennten Profilblockelemente 11 und 12 nach radial außen begrenzenden, die Straßenkontaktfläche bildenden Mantelfläche und dem jeweils tiefsten Punkt des Rillengrundes 10 angibt.

Der Rillengrund 10 ist, wie in den Figuren 1 bis 4 dargestellt, quer zur Erstreckungsrichtung der Rille geradlinig und eben ausgebildet.

Die Umfangsrille 7 ist mit einer Rillenbreite b ausgebildet, die sich im dargestellten Ausführungsbeispiel über die gesamte radiale Erstreckung der Umfangsrille 7 mit konstanter Breite b erstreckt. Im dargestellten Ausführungsbeispiel der Figuren 1 bis 4 weisen die Rillenwände 8 und 9 in den Querschnittsverläufen senkrecht zur Erstreckungsrichtung der Umfangsrille 7 Neigungswinkel α bzw. Neigungswinkel β zur radialen Richtung R auf, wobei für den Neigungswinkel α der Rillenwand 8 in dargestellter Ausführung α = 0° und für den Neigungswinkel β der Rillenwand 9 β=0 gewählt ist.

Die Breite b der Rille ist im dargestellten Ausfiihrungsbeispiel mit b = 3mm gewählt

Im Rillengrund 17 der Umfangsrille 7 ist zusätzlich eine Nut 17 der Breite c ausgebildet, die sich in Erstreckungsrichtung der Umfangsille 7 längs der gesamten Erstreckung der Umfangsrille 7 von Querrille 15 zu Querrille 15 hindurch erstreckt. Die Nut 17 ist in dem in der Figur 1 von unten nach oben dargestellter Orientierung der Umfangsrichtung U gesehenen ersten von der der Umfangsrille 7 vorgeordneten die Umfangsrille 7 begrenzenden Querrille 5 ausgehenden Erstreckungsbereich 18 längs der Rillenwand 8 und in radialer Verlängerung der Rillenwand 8 nach innen erstreckt ausgebildet und erstreckt sich von der der Umfangsrille 7 vorgeordneten die Umfangsrille 7 begrenzenden Querrille 5 über eine Erstreckungslänge k im Abstand a₁ zur Rillenwand 9. Im Anschluss verläuft sie in einem Übergangsbereich 19 unter einem Winkel von ca. 45° zur Erstreckungsrichtung der Umfangsrille 7 quer durch die Umfangsrille 7 hindurch bis zur Rillenwand 9 und verläuft dann in einem zweiten Erstreckungsabschnitt 20 der Erstreckungslänge p längs der Rillenwand 9 in radialer Verlängerung der Rillenwand 9 im Abstand a₂ zur Rillenwand 8 bis zu der in der Figur 1 in Umfangsrichtung U gesehenen nachgeordneten die Umfangsrille 7 begrenzenden Querrille 5.

Für die Erstreckungslängen k und p gilt (p+k) ≤ L, wobei L die Gesamterstreckungslänge der Umfangsrille 7 in Haupterstreckungsrichtung der Umfangsrille 7 zwischen den die Umfangsrille 7 jeweils begrenzenden Querrillen 5 darstellt. Im dargestellten Ausführungsbeispiel ist p = (0,45 L) und k = (0,45 L) gewählt.

Die Nut 17 ist jeweils in den Querschnitten senkrecht zur Erstreckungsrichtung der Nut 17 mit einer Breite c ausgebildet, die im dargestellten Ausführungsbeispiel über die gesamte radiale Erstreckung der Nut 17 konstant ist.

Die. Nut 17 ist dabei mit einer Nuttiefe T_{N} ausgebildet, wobei die Nuttiefe T_{N} in allen Querschnittsebenen senkrecht zur Haupterstreckungsrichtung der Umfangsrille 7 jeweils den radialen Abstand zwischen der die beiden von der Umfangsrille 7 getrennten Profilblockelemente 11 und 12 nach radial außen begrenzenden, die Straßenkontaktfläche bildenden Mantelfläche und dem jeweils tiefsten Punkt de Nut 17 angibt.

Die Breite c ist mit 0,3 mm ≤ c ≤ 7mm gewählt. In einer besonderen Ausführung ist c mit 0,4 mm ≤ c ≤ 1mm gewählt. In dem dargestellten Ausfiihrungsbeispiel ist c = 0,5 mm gewählt.

Die für die Nuttiefe T_{N} und die Rillentiefe T_{R} gilt: T_{R} < T_{N}. Für die Nuttiefe T_{N} und die Tiefe der Rillentiefe T_{Q} der benachbarten Querrillen 5 im Mündungsbereich der Umfangsrille 7 in die jeweilige Querrille 5 gilt T_{N} < T_{Q}.

Für T_{Q} gilt: 6mm ≤ T_{Q} ≤ 20mm.
Für T_{R} gilt: (0,05 T_{Q}) ≤ T_{R} ≤ (0,95 T_{Q}).
Für T_{N} gilt: (0,1 T_{Q}) ≤ T_{N} ≤ (1,2 T_{Q}).

Für den Abstand a₁ im ersten Erstreckungsbereich 18 gilt (a₁+c) = b. Für den Abstand a₂ im zweiten Erstreckungsbereich 20 gilt (a₂+c) = b mit a₁ ≥ 3c und a₂ ≥ 3c jeweils gemessen im Rillengrund 10.

In den Fig.1 bis Fig.4 ist eine Ausführung dargestellt mit α=0° und β=0°. In anderer - nicht dargestellter Ausführung ist α und β größer als 0° gewählt, wobei α≤15° und β≤15° gewählt ist.

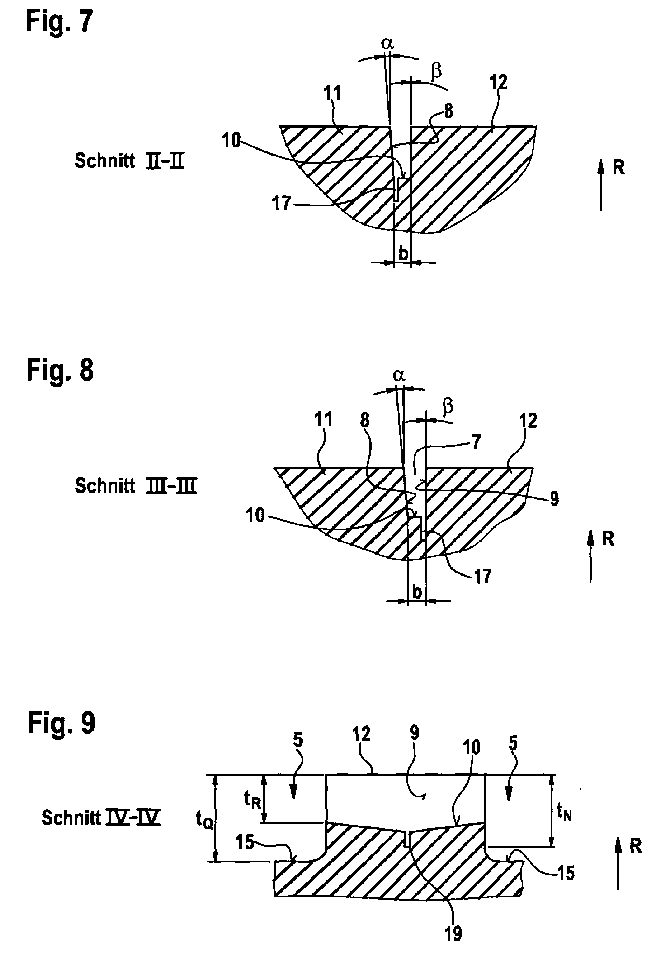

Die Figuren 7 bis 8 zeigen ein alternatives Ausführungsbeispiel der Profilrille 7, wobei bei der hier dargestellten Ausführungsform über die gesamte Erstreckung die Profilrille 7 der Neigungswinkel α der Rillenwand 8 größer ist als der Neigungswinkel β der Rillenwand 9. Beispielsweise ist im dargestellten Ausführungsbeispiel α = 5° und β = 0° gewählt. So ist die Breite der Rille ausgehend von der Breite b im Rillengrund nach radial außen zunimmt.

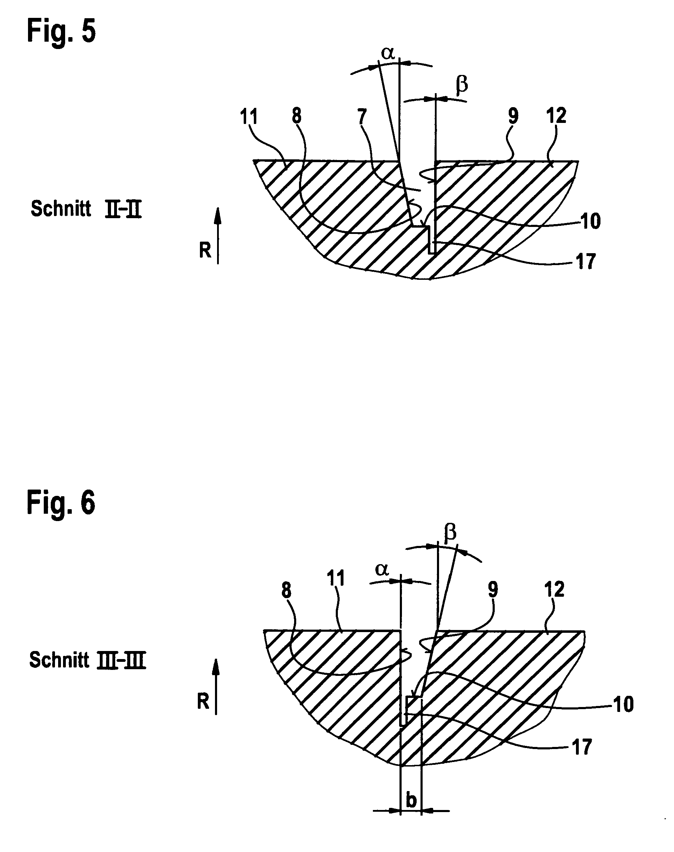

Die Figuren 5 und 6 zeigen eine weitere alternative Ausführungsform der Umfangsrille 7, bei der im ersten Erstreckungsbereich 18 der Umfangsrille 7 der Neigungswinkel β der Rillenwand 9 größer gewählt ist als der Neigungswinkel α der Rillenwand 8 und im zweiten Erstreckungsbereich 20 der Neigungswinkel α der Rillenwand 8 größer gewählt ist als der Neigungswinkel β der Rillenwand 9. Beispielsweise ist im ersten Erstreckungsbereich 18 über den gesamten Erstreckungsbereich β=5° und α=0° und im zweiten Erstreckungsbereich 20 über den gesamten Erstreckungsbereich 20 β=0' und α=5° gewählt. Im Übergangsbereich 19 von erstem Erstreckungsbereich 18 zu zweitem Erstreckungsbereich 20 ist längs des Übergangsbereichs 19 der Neigungswinkel β kontinuierlich verändert von 5° auf 0° und der Neigungswinkel α kontinuierlich von 0 auf 5° ausgebildet.

In anderer nicht dargestellter Ausbildung ist im ersten Erstreckungsbereich 18 über den gesamten Erstreckungsbereich β=1° und α=0° und im zweiten Erstreckungsbereich 20 über den gesamten Erstreckungsbereich 20 β=0° und α=1° gewählt. Im Übergangsbereich 19 von erstem Erstreckungsbereich 18 zu zweitem Erstreckungsbereich 20 ist längs des Übergangsbereichs 19 der Neigungswinkel β kontinuierlich verändert von 1 ° auf 0° und der Neigungswinkel α kontinuierlich von 0 auf 1° ausgebildet.

Fig. 9 zeigt eine weitere alternative Ausführung der in den Figuren 1 bis 4 dargestellten Umfangsrille 7, wobei die Umfangsrille 7 an ihrer Einmündung in die benachbarte Querrille 5 jeweils ihre geringste Rillentiefe T_{R} aufweist und ausgehend von der benachbarten Querrille 5 längs der Erstreckung der Umfangsrille 7 bis zum Übergang 19 der Nut 17 in ihrer Rillentiefe T_{R} kontinuierlich zunimmt und im Übergang 19 der Nut 17 ihren Maximalwert aufweist. Auch in diesem Ausführungsbeispiel ist dieser Maximalwert der Rillentiefe T_{R} kleiner als T_{N} ausgebildet. In diesem Ausführungsbeispiel ist der Rillengrund somit beiderseits des Übergangs 19 rampenförmig bis zur jeweiligen Querrille 5 hin angehoben ausgebildet.

In den Figuren 1 bis 4 ist der Übergang 19 in der Mitte der Längserstreckung in der Umfangsrille 7 ausgebildet dargestellt mit p = k.

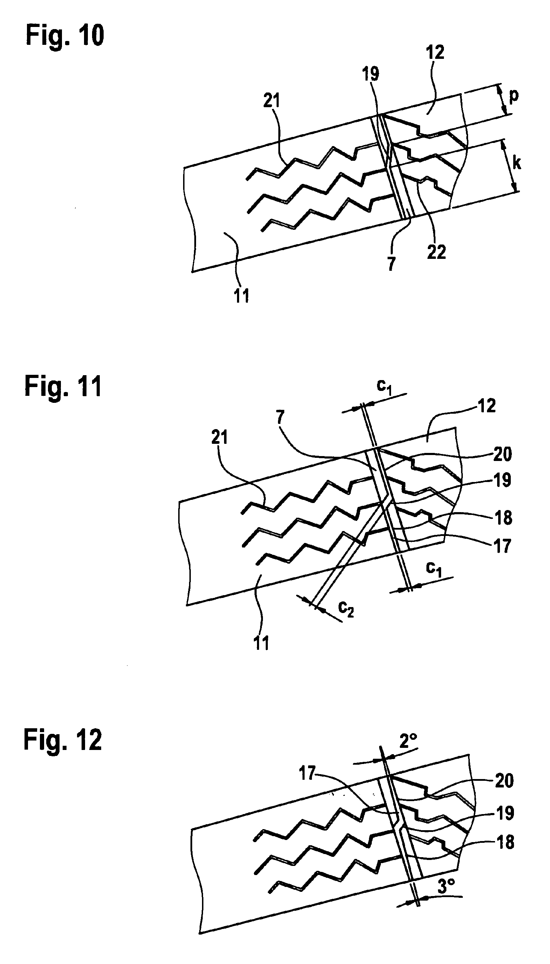

Fig. 10 zeigt eine Ausführung mit p < k.

Fig. 10 zeigt eine Ausführung, bei der der Übergang zwischen der Mündung eines Feineinschnittes 21 des Profilblockelementes 11 in der Umfangsrille 7 und der hierzu versetzten Mündung eines in Umfangsrichtung benachbarten Feineinschnittes 22 des Profilblockelementes 12 in der Umfangsrille angeordnet ist, so dass der Übergang die Mündungsstelle des Feineinschnittes 21 des Profilblockelements 11 und die Mündungsstelle des Feineinschnittes 22 des Profilblockelementes 12 in der Umfangsrille 7 miteinander verbindet.

Die in den Fig. 1 bis Fig.4 dargestellte Ausführung ist mit einer Breite c der Nut 17ausgebildet, bei der die Breite c über die gesamte Längserstreckung der Nut zwischen den benachbarten Querrillen 15 und 16 mit konstanter Größe ausgebildet ist.

Fig. 11 zeigt eine Ausführung, bei der die Nut 17 im ersten Erstreckungsbereich 18 und im zweiten Erstreckungsbereich 20 jeweils mit einer ersten konstanten Nutbreite c₁ und im Übergangsbereich 19 mit einer zweiten konstanten Nutbreite c₂ ausgebildet ist, wobei c₂ > c₁ gewählt ist. Beispielsweise ist c₁ = 0,5mm und c₂ = 0,8mm gewählt.

Fig. 12 zeigt eine Ausführung, bei der die Nut 17 in ihrem ersten Erstreckungsbereich 18 ausgehend von der angrenzenden Querrille 15 mit einer Breite c ausgebildet ist, die sich von der Querrille 15 bis zum Übergang 19 hin kontinuierlich vergrößert und dort ihr Maximum erreicht, welches sie im Übergang 19 beibehält. Im zweiten Erstreckungsbereich 20 ist die Breite c der Nut 17 ausgehend vom Übergang 19 bis zur nächsten Querrille 15 hin wieder kontinuierlich verkleinert ausgebildet. Die Vergrößerung im ersten Erstreckungsbereich 18 erfolgt unter einem Öffnungswinkel der beiden die Nut 17 begrenzenden Nutwände von beispielsweise 3°, die Verkleinerung im zweiten Erstreckungsbereich 17 unter einem Öffnungswinkel von beispielsweise 2°.

### Bezugszeichenliste

### (Teil der Beschreibung)

- 1: Profilblockreihe
- 2: Profilblockreihe
- 3: Profilblockreihe
- 4: Umfangsrille
- 5: Querrille
- 6:
- 7: Umfangsrille
- 8: Rillenwand
- 9: Rillenwand
- 10: Rillengrund
- 11: Profilblockelement
- 12: Profilblockelement
- 13: Profilblockelement
- 14: Querrille
- 15: Rillengrund
- 16:
- 17: Nut
- 18: Erster Erstreckungsbereich
- 19: Übergang
- 20: Zweiter Erstreckungsbereich
- 21: Feineinschnitt
- 22: Feineinschnitt
- 23: Feineinschnitt

## Patentansprüche

1. Laufflächenprofil eines Fahrzeugreifens - insbesondere eines Fahrzeugluftreifens - mit zwei in axialer Richtung A des Fahrzeugluftreifens benachbarten radial erhabenen Profilblockelementen (11,12), die durch eine Profilrille (7) voneinander beabstandet sind, wobei die beide Profilblockelemente (11,12) in Umfangsrichtung zu beiden Seiten jeweils von einer Querrille (15) begrenzt werden und sich die Profilrille (7) von der einen die beiden Profilblockelemente (11,12) begrenzenden Querrille (15) zu der anderen die beiden Profilblockelemente (11,12) begrenzenden Querrille (15) erstreckt, mit längs der Erstreckungsrichtung der Profilrille (7) verändert ausgebildeten in axialer Richtung A des Fahrzeugreifens gemessenen Quersteifigkeiten beider Profilblockelemente (11,12), wobei ausgehend von der ersten Querrille (15) zur zweiten Querrille (15) die Quersteifigkeit des ersten Profilblockelementes (12) zu- und die Quersteifigkeit des zweiten Profilblockelementes (11) abnimmt, mit einem gegenüber dem Rillengrund (15) der Querrillen (15) radial erhöhten Rillengrund (10) der Profilrille (7),
**dadurch gekennzeichnet,**
**dass** längs der gesamten Erstreckung der Profilrille (7) im Rillengrund (10) eine zusätzliche schmale Nut (17) mit einer in radialer Richtung R gemessenen Nuttiefe t_{N} ausgebildet ist, wobei sich die Nut (17) ausgehend von der ersten Querrille (15) in Richtung zweiter Querrille (15) in einem ersten Erstreckungsbereich (18) längs der Profilrille (7) in radialer Verlängerung der Profilrille (7) an der das zweite Profilblockelement (11) begrenzenden Rillenwand (8) der Profilrille (7) und im Abstand a₁ mit a₁>0 vom ersten Profilblockelement (12) und in einem bis zur zweiten Querrille (15) reichenden Erstreckungsbereich (20) längs der Profilrille (7) in radialer Verlängerung der Profilrille (7) an der das erste Profilblockelement (12) begrenzenden Rillenwand (9) der Profilrille (7) im Abstand a₂ mit a₂>0 vom zweiten Profilblockelement (11) erstreckt, mit einem Übergang (19) zwischen erstem (18) und zweitem (20) Erstreckungsbereich, in welchem die Nut (17) in ihrem Verlauf sich quer zur Erstreckungsrichtung der Profilrille (7) über die Breite der Profilrille (7) hinweg von der das zweite Profilblockelement (11) begrenzenden (8) zu der das erste Profilblockelement (12) begrenzenden Rillenwand (9) erstreckt.

2. Laufflächenprofil gemäß den Merkmalen von Anspruch 1,
wobei der Rillengrund (10) der Profilrille (7) mit längs seiner Erstreckung in Erstreckungsrichtung der Profilrille (7) konstanter Rillentiefe t_{R} ausgebildet ist, wobei die Rillentiefe t_{R} in jedem Querschnitt senkrecht zur Erstreckungsrichtung der Profilrille (7) jeweils der maximale radiale Abstand von der die beiden Profilblockelemente (11,12) in radialer Richtung R des Reifens nach außen begrenzenden, die Straßenkontaktoberfläche bildenden Mantelfläche ist.

3. Laufflächenprofil gemäß den Merkmalen von Anspruch 1,
wobei der Rillengrund (10) der Profilrille (7) ausgehend von den beiden Querrillen bis zu dem die Profilrille (7) querenden Nutabschnitt (19) mit längs der Erstreckung des Rillengrundes (10) in Erstreckungsrichtung der Profilrille (7) zunehmender Rillentiefe t_{R} ausgebildet ist, wobei die Rillentiefe t_{R} in jedem Querschnitt senkrecht zur Erstreckungsrichtung der Profilrille (7) jeweils der maximale radiale Abstand von der die beiden Profilblockelemente (11,12) in radialer Richtung R des Reifens nach außen begrenzenden, die Straßenkontaktoberfläche bildenden Mantelfläche ist.

4. Laufflächenprofil gemäß den Merkmalen von einem oder mehreren der vorangegangenen Ansprüche,
wobei die das erste Profilblockelement (12) begrenzende Rillenwand (9) der Profilrille (7) in den Querschnittsebenen senkrecht zur Erstreckungsrichtung der Profilrille (7) einen Neigungswinkel α zur radialen Richtung R des Fahrzeugluftreifens und die das zweite Profilblockelement (11) begrenzende Rillenwand (8) der Profilrille (7) in den Querschnittsebenen senkrecht zur Erstreckungsrichtung der Profilrille (7) einen Neigungswinkel β zur radialen Richtung R des Fahrzeugluftreifens aufweist, wobei
0°≤α≤15° und 0°≤β≤15°.

5. Laufflächenprofil gemäß den Merkmalen von Anspruch 4,
wobei in allen Querschnittebenen senkrecht zur Erstreckungsrichtung der Profilrille (7) α = β ausgebildet ist.

6. Laufflächenprofil gemäß den Merkmalen von Anspruch 4,
wobei in allen Querschnittebenen senkrecht zur Erstreckungsrichtung der Profilrille (7) α > β ausgebildet ist.

7. Laufflächenprofil gemäß den Merkmalen von Anspruch 4,
wobei im ersten Erstreckungsbereich (18) der Profilrille (7) in allen Querschnittebenen senkrecht zur Erstreckungsrichtung der Profilrille α > β und im zweiten Erstreckungsbereich (20) der Profilrille (7) in allen Querschnittebenen senkrecht zur Erstreckungsrichtung der Profilrille (7) β > α ausgebildet ist.

8. Laufflächenprofil gemäß den Merkmalen von einem oder mehreren der vorangegangenen Ansprüche,
wobei die Nut (17) längs ihrer Erstreckung mit einer quer zur Erstreckungsrichtung gemessenen Breite c ausgebildet ist mit 0,3mm ≤ c ≤ 7mm, insbesondere mit 0,4mm ≤ c ≤ 1mm.

9. Laufflächenprofil gemäß den Merkmalen von Anspruch 8,
wobei die Breite c der Nut (17) längs ihrer Erstreckung im ersten Erstreckungsbereich (18) und/oder im zweiten Erstreckungsbereich (20) und/oder im Übergang (19) jeweils ein konstanter Wert ist.

10. Laufflächenprofil gemäß den Merkmalen von Anspruch 9,
wobei die Breite c der Nut (17) längs ihrer gesamten Erstreckung im ersten (18) und zweiten Erstreckungsbereich (19) und insbesondere auch im Übergang (19) identisch ist.

11. Laufflächenprofil gemäß den Merkmalen von Anspruch 8 oder 9,
wobei die Breite c der Nut (17) längs ihrer Erstreckung im Übergang (19) größer ist als im ersten (18) und im zweiten Erstreckungsbereich (19).

12. Laufflächenprofil gemäß den Merkmalen von Anspruch 8,9 oder 11,
wobei die Breite c der Nut (17) längs ihrer Erstreckung im ersten Erstreckungsbereich (18) ausgehend von der ersten Querrille (15) bis zum Übergang (19) und im zweiten Erstreckungsbereich (20) ausgehend von der zweiten Querrille (15) bis zum Übergang (19) jeweils mit - insbesondere kontinuierlich - zunehmender Größe ausgebildet ist.

## Claims

1. Tread profile of a vehicle tyre - in particular of a pneumatic vehicle tyre - with two radially raised profile block elements (11, 12), which are neighbouring in the axial direction A of the pneumatic vehicle tyre and are spaced apart from each other by a profile groove (7), the two profile block elements (11, 12) being respectively delimited on both sides in the circumferential direction by a transverse groove (15) and the profile groove (7) being made to extend from the one transverse groove (15) delimiting the two profile block elements (11, 12) to the other transverse groove (15) delimiting the two profile block elements (11, 12), with transverse stiffnesses of the two profile block elements (11, 12), measured in the axial direction A of the vehicle tyre, formed such that they change along the direction of extent of the profile groove (7), the transverse stiffness of the first profile block element (12) increasing and the transverse stiffness of the second profile block element (11) decreasing from the first transverse groove (15) to the second transverse groove (15), with a groove base (10) of the profile groove (7) that is radially raised with respect to the groove base (15) of the transverse grooves (15), **characterized in that** an additional narrow channel (17) with a channel depth t_{N}, measured in the radial direction R, is formed along the entire extent of the profile groove (7), in the groove base (10), the channel (17) being made to extend from the first transverse groove (15) in the direction of the second transverse groove (15) in a first range of extent (18) along the profile groove (7) as a radial extension of the profile groove (7) on the groove wall (8) of the profile groove (7) that delimits the second profile block element (11), and at a distance a₁ from the first profile block element (12), where a₁ > 0, and in a second range of extent (20) along the profile groove (7) as a radial extension of the profile groove (7) on the groove wall (9) of the profile groove (7) that delimits the first profile block element (12), at a distance a₂ from the second profile block element (11), where a₂ > 0, with a transition (19) between the first range of extent (18) and the second range of extent (20) in which the channel (17) is made to extend in its path transversely in relation to the direction of extent of the profile groove (7) over the width of the profile groove (7) from the groove wall (8) delimiting the second profile block element (11) to the groove wall (9) delimiting the first profile block element (12).

2. Tread profile according to the features of Claim 1, the groove base (10) of the profile groove (7) being formed with a constant groove depth t_{R} along its extent in the direction of extent of the profile groove (7), the groove depth t_{R} in each cross section perpendicular to the direction of extent of the profile groove (7) respectively being the maximum radial distance of the lateral surface outwardly delimiting the two profile block elements (11, 12) in the radial direction R of the tyre and forming the road contact surface.

3. Tread profile according to the features of Claim 1, the groove base (10) of the profile groove (7) being formed from the two transverse grooves to the channel portion (19) crossing the profile groove (7) with increasing groove depth t_{R} along the extent of the groove base (10) in the direction of extent of the profile groove (7), the groove depth t_{R} in each cross section perpendicular to the direction of extent of the profile groove (7) respectively being the maximum radial distance of the lateral surface outwardly delimiting the two profile block elements (11, 12) in the radial direction R of the tyre and forming the road contact surface.

4. Tread profile according to the features of one or more of the preceding claims, the groove wall (9) of the profile groove (7) that delimits the first profile block element (12) having in the cross-sectional planes perpendicular to the direction of extent of the profile groove (7) an angle of inclination α in relation to the radial direction R of the pneumatic vehicle tyre and the groove wall (8) of the profile groove (7) that delimits the second profile block element (11) having in the cross-sectional planes perpendicular to the direction of extent of the profile groove (7) an angle of inclination β in relation to the radial direction R of the pneumatic vehicle tyre, where 0° ≤ α ≤ 15° and 0° ≤ β ≤ 15°.

5. Tread profile according to the features of Claim 4, α = β being formed in all the cross-sectional planes perpendicular to the direction of extent of the profile groove (7).

6. Tread profile according to the features of Claim 4, α > β being formed in all the cross-sectional planes perpendicular to the direction of extent of the profile groove (7).

7. Tread profile according to the features of Claim 4, α > β being formed in all the cross-sectional planes perpendicular to the direction of extent of the profile groove (7) in the first range of extent (18) of the profile groove (7) and β > α being formed in all the cross-sectional planes perpendicular to the direction of extent of the profile groove (7) in the second range of extent (20) of the profile groove (7).

8. Tread profile according to the features of one or more of the preceding claims, the channel (17) being formed along its extent with a width c, measured transversely in relation to the direction of extent, where 0.3 mm ≤ c ≤ 7 mm, in particular where 0.4 mm ≤ c ≤ 1 mm.

9. Tread profile according to the features of Claim 8, the width c of the channel (17) respectively having a constant value along its extent in the first range of extent (18) and/or in the second range of extent (20) and/or at the transition (19).

10. Tread profile according to the features of Claim 9, the width c of the channel (17) being identical along its entire extent in the first range of extent (18) and the second range of extent (20) and, in particular, also at the transition (19).

11. Tread profile according to the features of Claim 8 or 9, the width c of the channel (17) along its extent being greater at the transition (19) than in the first range of extent (18) and in the second range of extent (19).

12. Tread profile according to the features of Claim 8, 9 or 11, the width c of the channel (17) along its extent being formed respectively with an increasing size - in particular a continuously increasing size - in the first range of extent (18) from the first transverse groove (15) to the transition (19) and in the second range of extent (20) from the second transverse groove (15) to the transition (19).

## Revendications

1. Profil de bande de roulement pour bandage de roue de véhicule et en particulier pour bandage pneumatique de roue de véhicule, qui présente deux éléments (11, 12) de bloc profilé en relief radial, voisins dans la direction axiale A du bandage pneumatique pour roue de véhicule et séparés l'un de l'autre par une rainure profilée (7),
les deux éléments (11, 12) de bloc profilé étant délimités de chacun des deux côtés dans la direction périphérique par une rainure transversale (15) et la rainure transversale (15) qui délimite la rainure profilée (7) de l'un des deux éléments (11, 12) de bloc profilé s'étendant vers la rainure transversale (15) qui délimite l'autre des deux éléments (11, 12) de bloc profilé,
la rigidité transversale des deux éléments (11, 12) de bloc profilé, mesurée dans la direction axiale A du bandage pour roue de véhicule, variant dans la direction d'extension de la rainure profilée (7), la rigidité transversale du premier élément (12) de bloc profilé augmentant et la rigidité transversale du deuxième élément (11) de bloc profilé diminuant entre la première rainure transversale (15) et la deuxième rainure transversale (15), le fond (10) de la rainure profilée (7) étant plus haut radialement que le fond (15) des rainures transversales (15),
**caractérisé en ce que**
dans toute l'extension de la rainure profilée (7), une étroite rainure supplémentaire (17) dont la profondeur t_{N} mesurée dans la direction radiale R est formée dans le fond (10),
sur la paroi (8) de la rainure profilée (7) qui délimite le deuxième élément (11) de bloc profilé, dans une première partie d'extension (18) de la rainure profilée (7), la rainure (17) s'étendant dans le prolongement radial de la rainure profilée (7) à une distance a₁, avec a₁ > 0, du premier élément (12) de bloc profilé entre la première rainure transversale (15) et la deuxième rainure transversale (15) et dans une deuxième partie d'extension (20) de la rainure profilée (7), qui s'étend jusqu'à la deuxième rainure transversale (15), dans le prolongement radial de la rainure profilée (7), elle s'étend sur la paroi (9) de la rainure profilée (7) qui délimite le premier élément (12) de bloc profilé à une distance a₂, avec a₂ > 0, du deuxième élément (11) de bloc profilé, avec entre la première partie d'extension (18) et la deuxième partie d'extension (20) une transition (19) dans laquelle la rainure (17) s'étend transversalement par rapport à la direction d'extension de la rainure profilée (7) sur la largeur de la rainure profilée (7) en s'éloignant de la paroi (8) de la rainure qui délimite le deuxième élément (11) de bloc profilé jusqu'à la paroi (9) de la rainure qui délimite le premier élément (12) de bloc profilé.

2. Profil de bande de roulement selon les caractéristiques de la revendication 1, dans lequel le fond (10) de la rainure profilée (7) est configuré avec une profondeur t_{R} constante dans son extension dans la direction de la rainure profilée (7), la profondeur t_{R} de la rainure dans toute section transversale perpendiculaire à la direction d'extension de la rainure profilée (7) étant la distance radiale maximale depuis la surface d'enveloppe qui forme la surface de contact avec la chaussée et qui délimite vers l'extérieur les deux éléments (11, 12) de bloc profilé dans la direction radiale R du bandage de roue.

3. Profil de bande de roulement selon les caractéristiques de la revendication 1, dans lequel, partant des deux rainures transversales jusqu'à la partie (19) de rainure qui traverse la rainure profilée (7), le fond (10) de la rainure profilée (7) est configuré avec une profondeur t_{R} croissante dans l'extension du fond (10) de la rainure dans la direction d'extension de la rainure profilée (7), la profondeur t_{R} de la rainure dans toute section transversale perpendiculaire à la direction d'extension de la rainure profilée (7) étant la distance radiale maximale par rapport à la surface d'enveloppe qui délimite vers l'extérieur les deux éléments (11, 12) de bloc profilé dans la direction radiale R du bandage de roue et qui forme la surface de contact avec la chaussée.

4. Profil de bande de roulement selon les caractéristiques d'une ou plusieurs des revendications précédentes, dans lequel la paroi (9), qui délimite le premier élément (12) de bloc profilé, de la rainure profilée (7) présente dans les plans de coupe transversale perpendiculaires à la direction d'extension de la rainure profilée (7) un angle d'inclinaison α par rapport à la direction radiale R du bandage pneumatique pour roue de véhicule et la paroi (8), qui délimite le deuxième élément (11) de bloc profilé, de la rainure profilée (7) présente dans les plans de coupe transversale perpendiculaires à la direction d'extension de la rainure profilée (7) un angle d'inclinaison β par rapport à la direction radiale R du bandage pneumatique pour roue de véhicule, avec 0° ≤ α ≤ 15° et 0° ≤ β ≤ 15°.

5. Profil de bande de roulement selon les caractéristiques de la revendication 4, dans lequel α = β dans tous les plans de coupe transversale perpendiculaire à la direction d'extension de la rainure profilée (7).

6. Profil de bande de roulement selon les caractéristiques de la revendication 4, dans lequel α > β dans tous les plans de coupe transversale perpendiculaire à la direction d'extension de la rainure profilée (7).

7. Profil de bande de roulement selon les caractéristiques de la revendication 4, dans lequel dans tous les plans de coupe transversale perpendiculaire à la direction d'extension de la rainure profilée, α > β dans la première partie (18) d'extension de la rainure profilée (7) et dans tous les plans de coupe transversale perpendiculaire à la direction de la rainure profilée (7), β > α dans la deuxième partie d'extension (20) de la rainure profilée (7).

8. Profil de bande de roulement selon les caractéristiques d'une ou plusieurs des revendications précédentes, dans lequel le long de son extension, la rainure (17) est configurée avec une largeur c, mesurée dans une direction transversale par rapport à sa direction d'extension, qui vérifie 0,3 mm ≤ c ≤ 7 mm et en particulier 0,4 mm ≤ c ≤ 1 mm.

9. Profil de bande de roulement selon les caractéristiques de la revendication 8, dans lequel la largeur c de la rainure (17) dans son extension dans la première partie d'extension (18), et/ou dans la deuxième partie d'extension (20) et/ou dans la transition (19) a une valeur constante.

10. Profil de bande de roulement selon les caractéristiques de la revendication 9, dans lequel la largeur c de la rainure (17) est identique dans son extension dans la première partie d'extension (18), dans la deuxième partie d'extension (20) et en particulier dans la transition (19).

11. Profil de bande de roulement selon les caractéristiques des revendications 8 ou 9, dans lequel la largeur c de la rainure (17) est plus grande dans son extension dans la transition (19) que dans la première partie d'extension (18) et la deuxième partie d'extension (19).

12. Profil de bande de roulement selon les caractéristiques des revendications 8, 9 ou 11, dans lequel dans son extension dans la première partie d'extension (18), la largeur c de la rainure (17) présente une taille qui croît en particulier de manière continue entre la première rainure transversale (15) et la transition (19) et dans sa deuxième partie d'extension (20) entre la deuxième rainure transversale (15) et la transition (19).
